# EUROPÄISCHE PATENTSCHRIFT

(11) **EP 2 321 215 B1**
(45) Veröffentlichungstag und Bekanntmachung des Hinweises auf die Patenterteilung: **04.07.2012**
(21) Anmeldenummer: 09775954.2
(22) Anmeldetag: 13.07.2009
(51) Int. Cl.: B66F 9/14, F16N 11/04

(54) **ANBAUGERÄT FÜR GABELSTAPLER ODER HUBLADER**
ATTACHMENT FOR FORKLIFT TRUCKS OR SHOVEL LOADERS
APPAREIL RAPPORTÉ POUR CHARIOT ÉLÉVATEUR À FOURCHE OU CHARGEUR ÉLÉVATEUR

(30) Priorität: 28.07.2008 DE 102008035167
(43) Veröffentlichungstag der Anmeldung: 18.05.2011
(73) Patentinhaber: Hans H. Meyer GmbH, 38259 Salzgitter (DE)
(72) Erfinder: GEBHARDT, Andreas, 38124 Braunschweig (DE)
(74) Vertreter: Stornebel, Kai
(86) Internationale Anmeldenummer: PCT/DE2009/000969
(87) Internationale Veröffentlichungsnummer: WO 2010/012260

(56) Entgegenhaltungen:
- EP-A- 0 631 975
- JP-A- 5 024 792
- JP-A- 6 066 345
- JP-A- 7 269 786
- JP-A- 2000 264 596
- JP-A- 2008 222 362

## Beschreibung

Die Erfindung ein Anbaugerät für Gabelstapler oder Hublader mit zumindest zwei, insbesondere relativ zueinander, verschieblich gelagerten Komponenten, die Einrichtungen zum Aufnehmen von Gütern aufweisen, wobei die Komponenten zumindest ein Führungselement aufweisen, das in einer Führung an zumindest einer Lagestelle beweglich gelagert ist.

An Gabelstaplern oder Hubladern können unterschiedliche Anbaugeräte angeordnet werden, die für den jeweiligen Einsatzzweck der Gabelstapler oder Hublader angepasst sind. Diese Anbaugeräte sind in der Regel höhenverfahrbar an dem Gabelstapler angeordnet, so dass die Einrichtungen zum Aufnehmen von Gütern in die gewünschte Höhe verfahren werden können. Im einfachsten Fall sind die Einrichtungen zum Aufnehmen von Gütern als so genannte Gabeln ausgebildet, die so angeordnet sind, dass sie Freiräume unterhalb einer Palette eingefahren werden können. Nach dem Einfahren unter eine Palette wird diese angehoben und mit dem Gabelstapler oder Hublader an die gewünschte Stelle verfahren und dort wieder abgesetzt.

Kompliziertere Anbaugeräte weisen mehrere solcher Komponenten auf, die relativ zueinander verschiebbar gelagert sind, so dass die Breite zwischen den Gabeln variiert werden kann. Ebenfalls können eine Vielzahl solcher Gabeln an dem Anbaugerät angeordnet sein, so dass beispielsweise zwei Gabelpaare vorgesehen sein können, um zwei Paletten gleichzeitig anheben zu können. Hierzu ist es vorgesehen, dass die jeweiligen Komponenten relativ zueinander verschieblich gelagert sind, beispielsweise an einem Rahmen, um den Abstand zwischen sich einstellen zu können. Zum Verstellen der Lage der Komponenten, beispielsweise zueinander, sind Führungselemente in Führungen an zumindest einer Lagerstelle beweglich gelagert. Diese Lagerstelle ist insbesondere eine Längsführung, um die Ausrichtung der Komponenten zueinander sicherzustellen. Solche Lagerstellen bedürfen einer ständigen Schmierung, um die Beweglichkeit und Verschiebbarkeit der Komponenten zueinander oder zu einer anderen Baugruppe zu erhalten.

Die Schmierung an solchen Lagerstellen kann durch periodisches Nachschmieren über Fettpressen und Schmiermittel erfolgen. Eine solche Schmierung ist personalintensiv, zeitintensiv und wird von den Nutzern von Gabelstaplern nach Möglichkeit ausgeschlossen.

Weiterhin gibt es extern auf ein Anbaugerät aufschraubbare Schmierpatronen, die eine kontinuierliche Nachschmierung bewirken. Diese Schmierpatronen sind auswechselbar an dem Anbaugerät anzuschrauben. Bei rauen Arbeitsbedingungen und hohen mechanischen Belastungen besteht stets die Gefahr, dass eine solche Schmierpatrone abgerissen wird. Ebenfalls müssen konstruktive Vorkehrungen für einen leichten Zugang bei gleichzeitig ausreichendem Schutz für die Schmierpatronen vorgesehen werden.

Die gattungsbildende JP 2000-264596 A1 beschreibt einen Seitenschieber für einen Gabelstapler mit einem oberen Träger, in dem eine Nut vorgesehen ist. Diese Nut ist über eine Platte abgedeckt und mit einem Schmiernippel versehen. Eine Schmierstopfvorratsstelle ist unterhalb des Schmiernippels ausgebildet.

Aufgabe der vorliegenden Erfindung ist es daher, ein verbessertes Anbaugerät bereitzustellen, das die oben beschriebenen Nachteile nicht aufweist. Erfindungsgemäß wird diese Aufgabe durch ein Anbaugerät mit den Merkmalen des Hauptanspruchs gelöst. Vorteilhafte Ausgestaltungen und Weiterbildungen der Erfindungen sind in den Unteransprüchen aufgeführt.

Das erfindungsgemäße Anbaugerät für Gabelstapler oder Hublader mit zumindest zwei, insbesondere relativ zueinander, verschieblich gelagerten Komponenten, die Einrichtungen zum Aufnehmen von Gütern aufweisen, wobei die Komponenten zumindest ein Führungselement aufweisen, das in einer Führung an zumindest einer Lagerstelle beweglich gelagert ist, sieht vor, dass der Lagerstelle des Führungselementes eine Schmiereinrichtung zugeordnet ist, die innerhalb der Komponente angeordnet ist und einen innerhalb der Komponente ausgebildeten Schmierstoffvorratsraum aufweist. Der Schmierstoffvorratsraum steht in strömungstechnischer Verbindung mit der Lagerstelle, wobei ihm ein Kraftspeicherelement zugeordnet ist, das den Druckkolben gegen den Schmierstoffvorrat mit Druck beaufschlagt. Durch die Integration der Schmiereinrichtung in die Komponente ist es möglich, relativ große Mengen eines Schmierstoffvorratsraumes in unmittelbarer Nähe zu der benötigten Schmierstelle im Bereich der Lagerstelle zu bevorraten und den Schmierstoff auf einem kurzen Weg sicher zu der benötigten Stelle zu leiten. Rohrleitungen oder Schläuche, die störungsanfällig sind, werden nicht mehr benötigt. Es wird sichergestellt, dass keine externen Bauteile beschädigt oder abgerissen werden können, so dass insgesamt die Zuverlässigkeit der Anbaugeräte erhöht und die Wartungsintervalle verlängert werden können. Bevorzugt ist das Kraftspeicherelement als ein Gasentwicklungselement ausgebildet, das nach Aktivierung ein Druckgas erzeugt, das auf den Druckkolben drückt. Die von dem Gasentwicklungselement produzierte Gasmenge ist dabei so eingestellt, dass die benötigte Schmierstoffmenge über den gesamten geplanten Zeitraum an die Lagerstelle bzw. die Schmierstelle gefördert wird. Das Schmiermittel wird über den Druckkolben und den sich erhöhenden Gasdruck in Richtung auf die Schmierstelle gefördert.

Bevorzugt weist der Schmierstoffvorratsraum eine von außen zugängliche, druckdichte Verschlusseinrichtung auf, über die es möglich ist, den Kraftspeicher auszuwechseln oder zu regenerieren. Beispielsweise können Druckpatronen ausgewechselt, Gasentwicklungselemente ausgetauscht oder andere Kraftspeicher neu gespannt oder geladen werden, so dass nach einer Rückführung des Druckkolbens in seine Ausgangsposition und dem Wiederauffüllen des Schmierstoffvorratsraumes mit dem benötigten Schmierstoff ein erneuter Schmierzyklus stattfinden kann. Bevorzugt ist die Verschlusseinrichtung reversibel betätigbar, beispielsweise in Gestalt einer Verschraubung, so dass auch ein häufiges Öffnen und Austauschen der Kraftspeicher oder Gasentwicklungselemente erfolgen kann.

Der Druckkolben ist bevorzugt gegenüber der Wandung des Schmiermittelvorratsraumes abgedichtet, so dass kein Schmiermittel seitlich an dem Druckkolben vorbei zwischen dem Druckkolben und der Wandung hindurchtreten kann. Ebenfalls wird vermieden, dass der Kraftspeicher, beispielsweise das Druckgas, in Kontakt mit dem Schmiermittel treten kann oder durch das Schmiermittel aus dem Schmiermittelvorratsraum entweichen kann.

Der Schmierstoffvorratsraum ist bevorzugt über einen oder mehrere Kanäle mit der Lagerstelle oder den Lagerstellen verbunden, sodass eine innerhalb der Komponente ausgebildete Schmierstoffleitung ausgebildet wird. Grundsätzlich ist es auch möglich, einen Schmierstoffvorratsraum zur Versorgung mehrerer Lagerstellen und Schmierstellen zu benutzen.

Eine Weiterbildung der Erfindung sieht vor, dass der Schmierstoffvorratsraum einen Füllzugang aufweist, der gegen den Druck des Druckkolbens abgedichtet ist. Auf diese Weise ist es möglich, von außen neues Schmiermittel in den Schmierstoffvorratsraum einzuführen, indem über den Befüllzugang neues Schmiermittel in den Vorratsraum hereingepresst wird. Ggf. ist es dazu notwendig, die Verschlusseinrichtung zu öffnen, eine Rückfahrbewegung des Druckkolbens in seine Ausgangsstellung zu ermöglichen. Ein mechanischer Anschlag des Druckkolbens kann innerhalb der Schmiereinrichtung vorgesehen sein, um zu verhindern, dass der Kolben aus dem Schmierstoffvorratsraum herausgedrückt wird. Dieser Anschlag kann beispielsweise in Gestalt eines Federringes ausgebildet sein.

Um ein Austreten des Schmierstoffes aus dem Befüllzugang zu vermeiden, ist dieser bevorzugt durch ein Schmiernippel verschlossen, ebenfalls können andere Ventile vorgesehen sein, die verhindern, dass das Schmiermittel durch den Befüllzugang austritt, jedoch ein Zuführen des Schmiermittels durch den Befüllzugang ermöglichen.

Zwischen dem Gasentwicklungselement und dem Druckkolben kann ein Expansionsraum ausgebildet sein, der mit dem Gasentwicklungselement in Verbindung steht. Im Expansionsraum findet eine Druckerhöhung durch die Gasentwicklung statt, wodurch der Druckkolben gegen den Schmierstoffvorrat gedrückt wird. Dieser Druck führt zur Nachförderung des Schmierstoffes zur Schmierstelle.

Die Schmiereinrichtung oder die Schmiereinrichtungen können entweder in der Führung oder in dem Führungselement angeordnet sein. Da die Führungen beispielsweise als polierte Führungsstangen mit einem runden Querschnitt ausgebildet sind, werden die Schmiereinrichtungen bevorzugt in der jeweiligen Führung angeordnet.

Nachfolgend wird ein Ausführungsbeispiel der Erfindung anhand der beigefügten Figuren näher erläutert. Gleiche Bezugszeichen in den unterschiedlichen Figuren bezeichnen gleiche Bauteile oder Komponenten. Es zeigen:
- Figur 1 -: ein Anbaugerät in einer ersten, auseinandergefahrenen Stellung;
- Figur 2 -: ein Anbaugerät gemäß Figur 1 in einer zusammengefahrenen Stellung;
- Figuren 3a bis 3d -: verschiedene Ansichten einer Komponente mit einer Führung;
- Figur 4 -: eine Detaildarstellung gemäß IV-IV in Figur 3a;
- Figur 5 -: eine Detailansicht einer Schmiereinrichtung in der Ausgangstellung; sowie
- Figur 6 -: eine Detailansicht gemäß Figur 5 in der Endstellung.

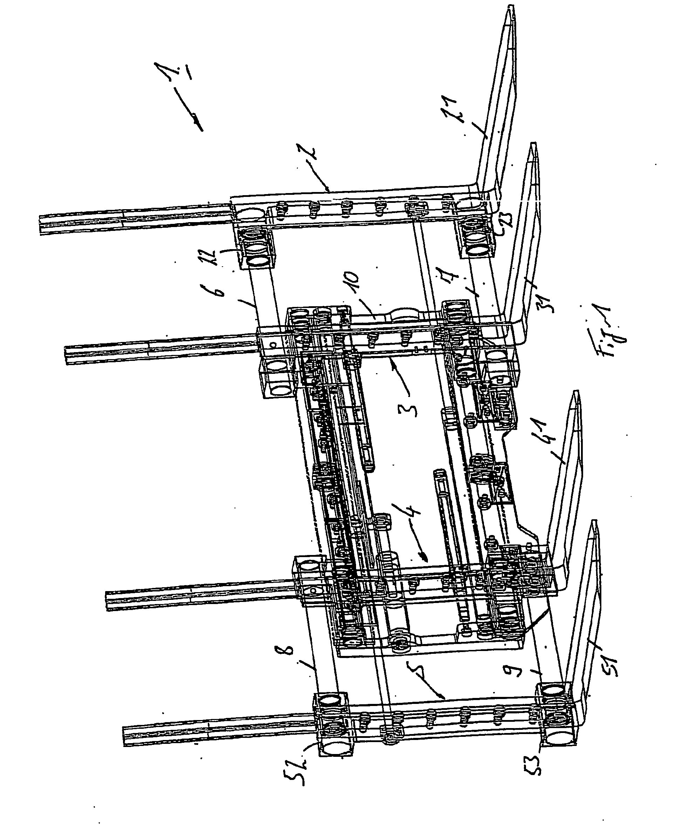

In der Figur 1 ist ein Anbaugerät 1 zum Anbau an einen Gabelstapler oder einen Hublader dargestellt. Das Anbaugerät 1 weist einen Rahmen 10 auf, an dem in dem dargestellten Ausführungsbeispiel vier Komponenten 2, 3, 4, 5 verschieblich gelagert sind. Die Komponenten 2, 3, 4, 5 sind ebenfalls relativ zueinander verschieblich gelagert und weisen Einrichtungen 21, 31, 41, 51 zum Aufnehmen von Gütern in Gestalt von Gabeln auf. Diese Gabeln 21, 31, 41, 51 können in Paletten eingefahren werden, damit diese angehoben werden können. Grundsätzlich ist es auch möglich, andere Einrichtungen zum Aufnehmen von Gütern vorzusehen, beispielsweise Aufnahmendorne für Coils, Greifer für Ballen oder dergleichen. In der Figur 1 ist das Anbaugerät 1 so ausgestattet, dass zwei Gabelpaare ausgebildet werden, sodass insgesamt zwei Paletten oder zwei Palettenstapel gleichzeitig angehoben und transportiert werden können. Die Gabeln 21, 31,41, 51 sind in ihrem Abstand zueinander entweder gekoppelt oder individuell verstellbar gelagert. Zur verschieblichen Lagerung der Komponenten 2, 3, 4, 5 sind Führungselemente 6, 7, 8, 9 in Gestalt von Führungsstangen vorgesehen, die in Führungen 22, 23, 52, 53 an den Komponenten 2, 5, gelagert sind. Die Führungselemente 6, 7, 8, 9 sind im dargestellten

Ausführungsbeispiel an zwei Komponenten 2, 4 fest gelagert, wobei diese Komponenten 3, 4, ebenfalls an Führungen an dem Rahmen 10 gelagert sind. Über herkömmliche Antriebe, insbesondere Hydraulikantriebe, können die Komponenten 2, 3, 4, 5 relativ zueinander und relativ zu dem Rahmen 10 verlagert werden, vorliegend verschoben werden. Dabei gleiten die Führungselemente 6, 7, 8, 9 in den Führungen 22, 23, 52, 53 entlang. Die Führungselemente 6, 7, 8, 9 sind in den Führungen 22, 23, 52, 53 im Rahmen einer Gleitlagerung gelagert und müssen zur Gewährleistung eines einwandfreien Betriebes ständig geschmiert werden. Die dazu vorgesehenen Schmiereinrichtungen sind innerhalb der Komponenten 2, 3, 4, 5 im Bereich der Führungen 22, 23, 52, 53 angeordnet. Weitere Schmiereinrichtungen 20 können an dem Rahmen 10 oder den Führungen für die inneren Komponenten 3, 4 angeordnet oder darin ausgebildet sein, damit die Führungselemente für diese Komponenten 3, 4 ebenfalls dauerhaft geschmiert werden können.

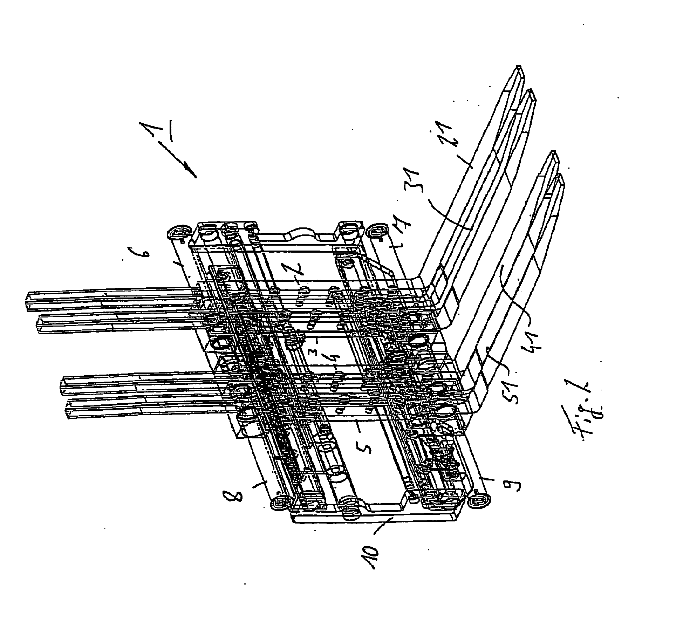

In der Figur 2 ist das Anbaugerät gemäß Figur 1 in einer zusammengefahrenen Stellung gezeigt, bei der die Gabeln 21, 31, 41, 51 paarweise zusammengefahren sind, damit nur eine Palette oder ein Gegenstand angehoben werden kann.

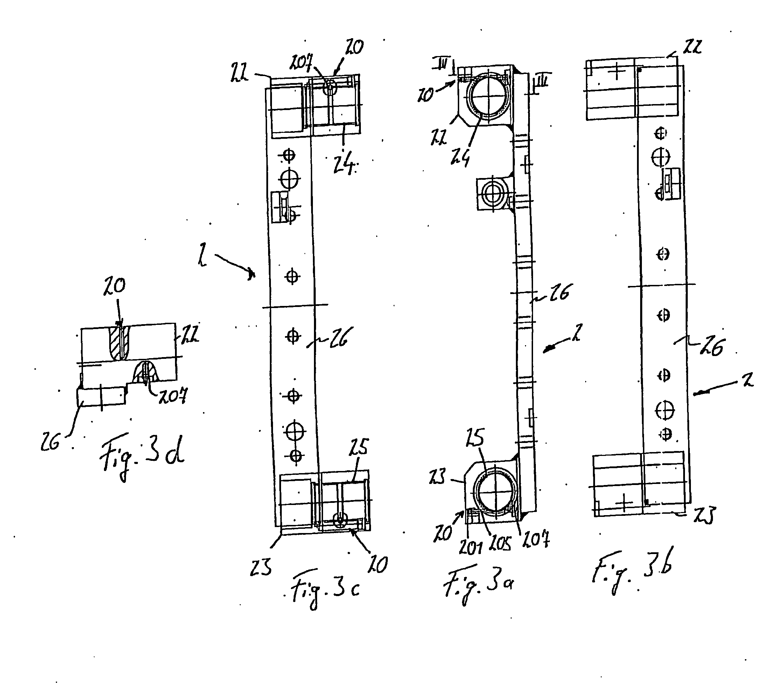

In den Figuren 3a bis 3d sind unterschiedliche Ansichten einer Komponente 2 dargestellt. Die Komponente 2 ist ohne Gabel 21 dargestellt und zeigt einen Träger 26, der an seinen beiden Enden Führungen 22, 23 aufweist. Die Führungen 22, 23 sind an dem Träger 26 angeschweißt, können jedoch auch auf andere Art und Weise daran befestigt oder ausgebildet sein. Die Führungen 22, 23 sind als Buchsen ausgebildet, in denen Bohrungen ausgebildet sind, in denen die Führungselemente 6, 7 entlang gleiten können. Innerhalb der Bohrungen sind Lagerstellen 24, 25 ausgebildet, über die eine längsverschiebliche Lagerung bei gleichzeitig paralleler Führung der Komponenten zueinander ermöglicht wird. Die zur Verlagerung notwendigen Antriebe sind nicht dargestellt. In den Figuren 3a bis 3c sind die Schmiereinrichtungen 20 aufgrund des kleinen Maßstabes nur andeutungsweise zu erkennen. Jede Führung 22, 23 weist eine Schmiereinrichtung 20 auf, die ein Kraftspeicherelement 201, einen Schmierstoffvorratsraum sowie einen Verbindungskanal 205 zu der Lagerstelle 24, 25 aufweist. Ebenfalls ist in den Figuren 3a bis 3d ein Schmiernippel 207 zu erkennen, über den entweder zusätzliches Schmiermittel der Lagerstelle zugeführt oder der Schmierstoffvorratsraum wieder aufgefüllt wird. Die Schmiereinrichtung 20 ist von außen zugänglich gestaltet, ebenso wie der Schmiernippel 207, sodass eine wiederholte Befüllung mit dem Schmiermittel erfolgen kann.

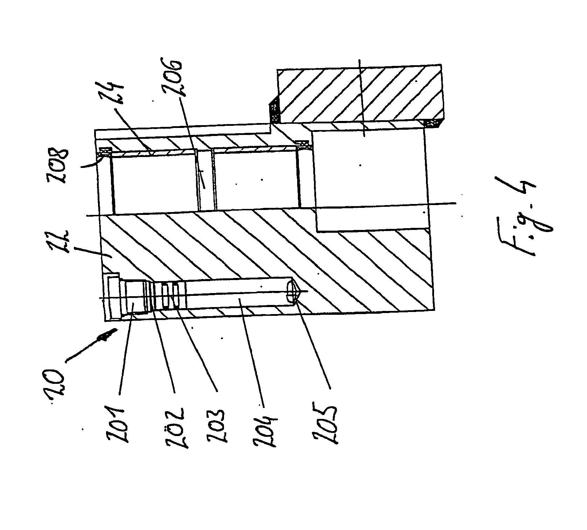

In der Figur 4 ist eine vergrößerte Detaildarstellung gemäß Schnitt IV-IV der Figur 3a dargestellt, in der der grundsätzliche Aufbau der Schmiereinrichtung 20 besser erkannt werden kann. Die Schmiereinrichtung 20 weist ein Kraftspeicherelement 201 auf, das innerhalb der Führung 22 angeordnet ist. Im vorliegenden Ausführungsbeispiel ist das Kraftspeicherelement 201 als eine einschraubbare Gasentwicklungszelle ausgebildet, die nach dem Auslösen oder Aktivieren einer Gasentwicklungseinrichtung Druckgas entwickelt, beispielsweise Wasserstoff. Innerhalb der Führung 22 ist ebenfalls ein Schmierstoffvorratsraum 204 ausgebildet, in dem sich ein Schmierstoffvorrat befindet. Innerhalb des Schmierstoffvorratraumes 204 ist ein Druckkolben 203 verschieblich gelagert. Der Druckkolben 203 ist gegenüber der Führung 22 und dem Schmierstoffvorratsraum 204 abgedichtet und befindet sich zwischen dem Schmierstoffvorrat und dem Kraftspeicherelement 201 bzw. dem Antriebskopf. Zwischen dem Antriebskopf 201 und dem Druckkolben 203 ist ein Expansionsraum 202 ausgebildet, in den das Expansionsgas eindringen kann. Durch die Freiwerdung des Expansionsgases erhöht sich der Druck innerhalb des Expansionsraumes 202, so dass der Druckkolben 203 gegen den Schmierstoffvorratsraum 204 mit Druck belastet wird. An dem dem Antriebskopf 201 gegenüberliegenden Ende des Schmierstoffvorratsraumes 204 ist eine Querbohrung 205 angeordnet, die zu einer Schmierstelle 206 innerhalb der Lagerstelle 24 führt. Die Schmierstelle 206 ist als eine Ringnut ausgebildet, in die der Schmierstoffvorrat aus dem Schmierstoffvorratsraum 204 hinein gepresst wird. Die Lagerstelle 24 kann Lagerschalen aufweisen und ist an ihren Enden über Dichtelemente 208 gegen einen übermäßigen Austritt des Schmierstoffes abgedichtet. Die Dichtelemente 208 dienen ebenfalls dazu, dass bei zunehmender Gasentwicklung durch den Antriebskopf 201 das Schmiermittel nicht ungehindert über die Schmierstelle 206 aus der Führung 22 herausgedrückt werden kann.

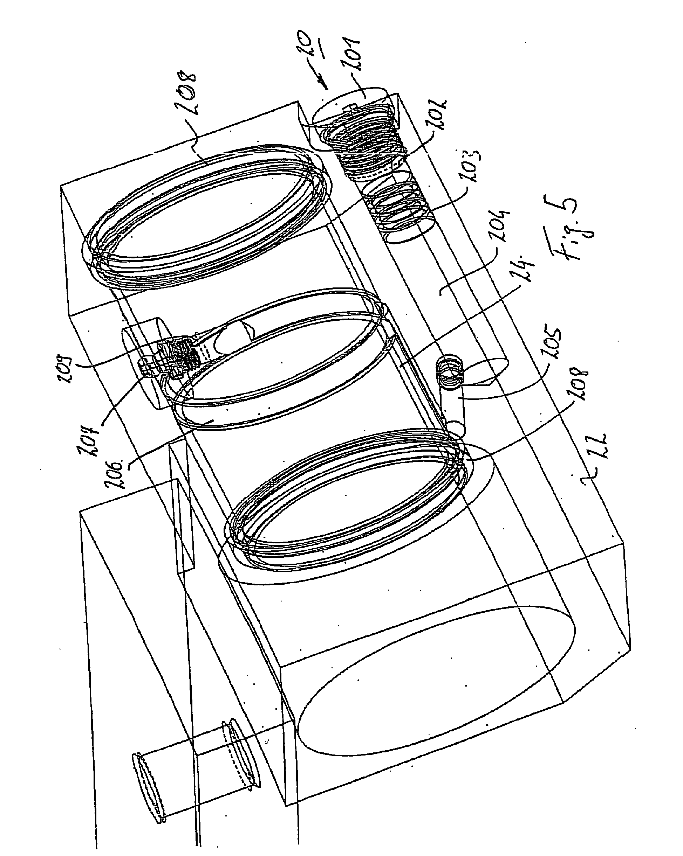

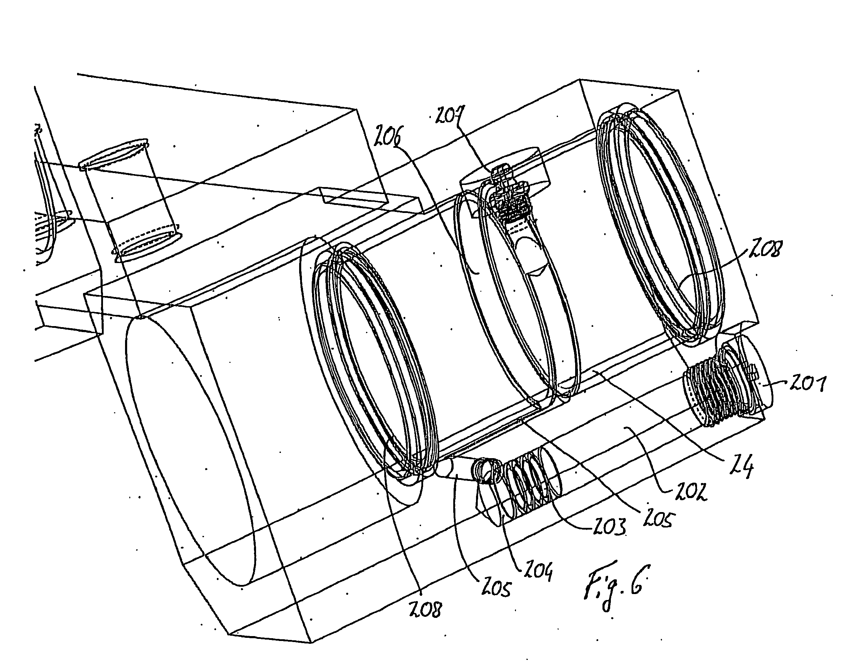

In den Figuren 5 und 6 sind perspektivische Darstellungen der Führung 22 mit der Schmiereinrichtung 20 dargestellt. In der Figur 5 ist die Schmiereinrichtung 20 im

Ausgangszustand gezeigt. Innerhalb der Führung 22 ist der Schmierstoffvorratsraum 204 ausgebildet, beispielsweise ausgebohrt. An einer Stirnseite ist ein Gewinde eingeschnitten, in das ein Verschlussstopfen 201 mit eingearbeiteter Gasentwicklungskartusche eingeschraubt ist und dem Schmierstoffvorratsraum 201 druckdicht abdichtet. Statt einer Gasentwicklungskartusche kann auch ein anderer Kraftspeicher oder ein anderes Kraftspeicherelement eingesetzt sein, beispielsweise eine Feder. Ein Druckkolben 203 ist mit Dichtringen versehen gegenüber der Wandung des Schmierstoffvorratsraumes 204 abgedichtet. Zwischen dem Druckkolben 203 und dem Antriebskopf 201 ist der Expansionsraum 202 ausgebildet. Eine Querbohrung 205 mit einem sich daran anschließenden weiteren Zuleitkanal leitet den Schmierstoff von dem Schmierstoffvorratsraum 204 zu der ringförmig ausgebildeten Schmierstelle 206. Beidseitig der Lagerstelle 24 innerhalb der Führung 22 sind Dichtringe 208 angeordnet, die ein Austreten von Schmierstoff aus der und ein Eindringen von Schmutz in die Lagerstelle 24 verhindern.

Ein Schmiernippel 207, der über einen Kanal mit der Schmierstelle 206 verbunden ist, dichtet einen Befüllzugang 209 ab, über den es möglich ist, ein Schmiermittel, beispielsweise Fett, durch den Schmiernippel 207 und die Schmierstelle 206 über die Querbohrung 205 zurück in den Schmierstoffvorratsraum 204 einzuführen. Dies wird zum erneuten Befüllen des Schmierstoffvorratsraumes 204 mit dem geeigneten Schmiermittel durchgeführt. Zum Wiederbefüllen wird das Verschlusselement 201 mit dem integrierten Antriebskopf entfernt, beispielsweise Fett durch den Schmiernippel 207 eingepresst und der Schmierstoffvorratsraum 204 erneut befüllt. Durch den Schmiermitteldruck wird der Druckkolben 203 zurück in die Ausgangsstellung, wie sie in der Figur 5 gezeigt ist, verlagert. Anschließend wird eine neue Gaskartusche oder ein Gasentwicklungsantriebskopf eingesetzt und die Verschlusseinrichtung 201 eingeschraubt. Nach dem Aktivieren des Kraftspeicherelementes bzw. der Gasentwicklungspatrone wird der Druckkolben 203 in Richtung auf die Querbohrung 205 gedrückt, wie es in der Figur 6 dargestellt ist. Dadurch wird der Schmierstoff, der in dem Schmierstoffvorratsraum 204 vorhanden ist, zu der Schmierstelle 206 transportiert.

Statt einer Beaufschlagung des Druckkolbens 203 über Druckgas können auch andere Kraftspeichereinrichtungen zur Beaufschlagung des Druckkolbens 203 mit einer Druckkraft vorgesehen sein. Ebenfalls ist es möglich, dass mehrere Schmierstellen 206 mit einer Schmiereinrichtung 20 versorgt werden. Grundsätzlich ist es auch möglich, die Schmiereinrichtung 20 statt in der Führung 22 in einem Führungselement 6 anzuordnen.

## Patentansprüche

1. Anbaugerät für Gabelstapler oder Hublader mit zumindest zwei, insbesondere relativ zueinander, verschieblich gelagerten Komponenten (2, 3, 4, 5), die Einrichtungen (21, 31, 41, 51) zum Aufnehmen von Gütern aufweisen, wobei die Komponenten (2, 3, 4, 5) zumindest ein Führungselement (6, 7, 8, 9) aufweisen, das in einer Führung (22, 23, 52, 53) an zumindest einer Lagerstelle (24, 25) beweglich gelagert ist, wobei der Lagerstelle (24) eine Schmiereinrichtung (20) zugeordnet ist, die in der Komponente (2, 3, 4, 5) angeordnet ist und einen innerhalb der Komponente (2, 3, 4, 5) ausgebildeten Schmierstoffvorratsraum (204) aufweist, der in strömungstechnischer Verbindung mit der Lagerstelle (24) steht, **dadurch gekennzeichnet, dass** dem Schmierstoffvorratsraum (204) ein Kraftspeicherelement (201) zugeordnet ist, das einen Druckkolben (203) gegen den Schmierstoffvorrat mit Druck beaufschlagt.

2. Anbaugerät nach Anspruch 1, **dadurch gekennzeichnet, dass** das Kraftspeicherelement (201) als ein Gasentwicklungselement ausgebildet ist.

3. Anbaugerät nach Anspruch 1 oder 2, **dadurch gekennzeichnet, dass** der Schmierstoffvorratsraum (204) eine von außen zugängliche, druckdichte Verschlusseinrichtung (201) aufweist.

4. Anbaugerät nach einem der voranstehenden Ansprüche, **dadurch gekennzeichnet, dass** der Druckkolben (203) gegenüber der Wandung des Schmierstoffvorratsraumes (204) abgedichtet ist.

5. Anbaugerät nach einem der voranstehenden Ansprüche, **dadurch gekennzeichnet, dass** der Schmierstoffvorratsraum (204) mit der Lagerstelle (24)
über einen Kanal (205) verbunden ist.

6. Anbaugerät nach einem der voranstehenden Ansprüche, **dadurch gekennzeichnet, dass** der Schmierstoffvorratsraum (204) einen Befüllzugang (209) aufweist, der gegen den Druck des Druckkolbens (203) abgedichtet ist.

7. Anbaugerät nach Anspruch 6 **dadurch gekennzeichnet, dass** der Befüllzugang (209) durch einen Schmiernippel (207) verschlossen ist.

8. Anbaugerät nach einem der Ansprüche 2 bis 7, **dadurch gekennzeichnet, dass** zwischen dem Gasentwicklungselement (201) und dem Druckkolben (203) ein Expansionsraum (202) ausgebildet ist.

9. Anbaugerät nach einem der voranstehenden Ansprüche, **dadurch gekennzeichnet, dass** die Schmiereinrichtung (20) in der Führung (22, 23, 52, 53) oder in dem Führungselement (6, 7, 8, 9) angeordnet ist.

## Claims

1. Add-on device for a forklift truck or shovel loader, having at least two components (2, 3, 4, 5) which are mounted in a displaceable manner, in particular in relation to one another, and have devices (21, 31, 41, 51) for accommodating articles, wherein the components (2, 3, 4, 5) have at least one guide element (6, 7, 8, 9) which is mounted in a movable manner in a guide (22, 23, 52, 53) at at least one bearing point (24, 25), wherein the bearing point (24) is assigned a lubricating device (20) which is arranged in the component (2, 3, 4, 5) and has a lubricant storage chamber (204) which is formed within the component (2, 3, 4, 5) and is connected in terms of flow to the bearing point (24), **characterized in that** the lubricant storage chamber (204) is assigned an energy-store element (201) which pressurizes a pressure piston (203) towards the lubricant store.

2. Add-on device according to Claim 1, **characterized in that** the energy-store element (201) is formed as a gas generating element.

3. Add-on device according to Claim 1 or 2, **characterized in that** the lubricant storage chamber (204) has an externally accessible, pressure-tight closure device (201).

4. Add-on device according to one of the preceding claims, **characterized in that** the pressure piston (203) is sealed off with respect to the wall of the lubricant storage chamber (204).

5. Add-on device according to one of the preceding claims, **characterized in that** the lubricant storage chamber (204) is connected to the bearing point (24) via a duct (205).

6. Add-on device according to one of the preceding claims, **characterized in that** the lubricant storage chamber (204) has a filling access (209) which is sealed off with respect to the pressure of the pressure piston (203).

7. Add-on device according to Claim 6, **characterized in that** the filling access (209) is closed by a lubricant nipple (207).

8. Add-on device according to one of Claims 2 to 7, **characterized in that** an expansion chamber (202) is formed between the gas generating element (201) and the pressure piston (203).

9. Add-on device according to one of the preceding claims, **characterized in that** the lubricating device (20) is arranged in the guide (22, 23, 52, 53) or in the guide element (6, 7, 8, 9).

## Revendications

1. Appareil rapporté pour chariot élévateur à fourche ou chargeur élévateur comprenant au moins deux composants (2, 3, 4, 5) montés déplaçables, en particulier l'un relativement à l'autre, qui présentent des dispositifs (21, 31, 41, 51) pour recevoir des biens, les composants (2, 3, 4, 5) présentant au moins un élément de guidage (6, 7, 8, 9) qui est monté mobile dans un guidage (22, 23, 52, 53) en au moins un palier (24, 25), auquel est affecté un dispositif de lubrification (20) qui est agencé dans les composants (2, 3, 4, 5) et présente un espace de réserve de lubrifiant (204) à l'intérieur des composants (2, 3, 4, 5), lequel espace se trouve en liaison fluidique avec le palier (24), **caractérisé en ce qu'**à l'espace de réserve de lubrifiant (204) est affecté un élément d'accumulation de force (201) qui soumet un piston presseur (203) à une pression contre la réserve de lubrifiant.

2. Appareil rapporté selon la revendication 1, **caractérisé en ce que** l'élément d'accumulation de force (201) est formé par un élément de dégagement de gaz.

3. Appareil rapporté selon la revendication 1 ou 2, **caractérisé en ce que** l'espace de réserve de lubrifiant (204) présente un dispositif de fermeture (201) accessible depuis l'extérieur, étanche à la pression.

4. Appareil rapporté selon l'une quelconque des revendications précédentes, **caractérisé en ce que** le piston presseur (203) est rendu étanche relativement à la paroi de l'espace de réserve de lubrifiant (204).

5. Appareil rapporté selon l'une quelconque des revendications précédentes, **caractérisé en ce que** l'espace de réserve de lubrifiant (204) est relié au palier (24) par l'intermédiaire d'un canal (205).

6. Appareil rapporté selon l'une quelconque des revendications précédentes, **caractérisé en ce que** l'espace de réserve de lubrifiant (204) présente un accès de remplissage (209) qui est rendu étanche relativement à la pression du piston presseur (203).

7. Appareil rapporté selon la revendication 6, **caractérisé en ce que** l'accès de remplissage (209) est fermé par un graisseur (207).

8. Appareil rapporté selon l'une quelconque des revendications 2 à 7, **caractérisé en ce qu'**un espace d'expansion (202) est formé entre l'élément de dégagement de gaz (201) et le piston presseur (203).

9. Appareil rapporté selon l'une quelconque des revendications précédentes, **caractérisé en ce que** le dispositif de lubrification (20) est agencé dans le guidage (22, 23, 52, 53) ou dans l'élément de guidage (6, 7, 8, 9).
